# EUROPÄISCHE PATENTSCHRIFT

(11) **EP 1 456 547 B1**
(45) Veröffentlichungstag und Bekanntmachung des Hinweises auf die Patenterteilung: **23.05.2007**
(21) Anmeldenummer: 02792741.7
(22) Anmeldetag: 07.11.2002
(51) Int. Cl.: F16D 1/072

(54) **HOHLWELLE**
HOLLOW SHAFT
ARBRE CREUX

(30) Priorität: 07.12.2001 DE 10160246
(43) Veröffentlichungstag der Anmeldung: 15.09.2004
(73) Patentinhaber: ThyssenKrupp Automotive AG, 44793 Bochum (DE)
(72) Erfinder: KIRMSSE, Helmut, FL-9494 Schaan (LI)
(74) Vertreter: Adams, Steffen
(86) Internationale Anmeldenummer: PCT/EP2002/012414
(87) Internationale Veröffentlichungsnummer: WO 2003/048597

(56) Entgegenhaltungen:
- EP-A- 0 278 292
- EP-A- 0 324 499
- FR-A- 2 777 213
- GB-A- 1 117 816
- US-A- 3 977 068
- US-A- 4 575 913

## Beschreibung

Die Erfindung betrifft eine Hohlwelle oder einen als Hohlwelle ausgebildeten Teil einer massiven Welle mit durch mechanisches Aufweiten am Außenmantel befestigtem Bauteil.

Derartige Hohlwellen werden häufig als Getriebewellen oder als Nockenwellen verwendet. Die GB 2 050 207 zeigt die Herstellung einer Nockenwelle, bei der die Hohlwelle durch mechanisches Aufweiten mit auf dem Außenmantel der Nockenwelle verbundenen Bauteilen dargestellt wird. Dabei bewegt sich ein Dom axial durch die komplette Hohlwelle, um sämtliche Aufbauteile mit dieser zu verbinden.

Dieses Verfahren bedingt einen hohen Werkzeugaufwand, führt zu einem großen Verschleiß am Aufweitstempel und erfordert eine hohe Fertigungszeit. Weiterhin ist die Hohlwelle äußerst knickgefährdet.

Von daher haben sich andere Fertigungsverfahren zum Herstellen insbesondere von mit einer Hohlwelle ausgebildeten Nockenwellen durchgesetzt. Insbesondere das axiale Aufschieben der Nocken über erhabene Abschnitte der Hohlwelle entsprechend der DE 41 21 951 C1 und das hydraulische Aufweiten entsprechend der US 3,977,068 haben sich als wirtschaftliche Verfahren durchgesetzt. Endseitige Anbauteile, wie Zahnräder oder Kettenräder bei Nockenwellen, werden mittels des jeweils angewendeten Aufweitverfahrens, sei es ein hydraulisches Aufweitverfahren oder ein mechanisches Aufweitverfahren, bei der Herstellung der Hohlwelle, speziell der Nockenwelle, in einem Arbeitsgang mit angebracht.

Vielfach kann es erforderlich werden, dass endseitige Anbauteile, wie Kettenräder, Zahnräder oder auch Nockenwellen-Verstelleinrichtungen, erst mit der Nockenwelle verbunden werden können, wenn diese bereits im Motorblock eingebaut ist. In derartigen Fällen ist es üblich, diese durch Verschrauben und/oder Verkeilen am Ende der Hohlwelle zu befestigen. Nachteilig kann es sich dabei ergeben, dass sehr aufwändige Befestigungseinrichtungen dann eingesetzt werden müssen, wenn die Anbauteile, beispielsweise ein Nockenwellenversteller, noch mit hydraulischen Anschlüssen durch die Nockenwelle versehen werden müssen. Weiterhin nachteilig verbleibt nur wenig Raum für Hydraulikkanäle sowie die sehr hohen Belastungen der meistens verwendeten zentralen Befestigungsschraube.

Aus der EP 0 324 499 A1 die eine Grundlage für den Oberbegriff des Anspruchs 1 bildet ist eine gebaute Welle aus einer Hohlwelle und darauf durch Aufweiten derselben in einzelnen zugeordneten Längsabschnitten festgelegten Elementen mit einer Durchgangsbohrung bekannt. Bei diesen Elementen kann es sich um Lagerbuchsen, Nocken oder Zahnräder handeln. Innerhalb der Hohlwelle sind im Bereich von einzelnen Elementen in der Hohlwelle anliegende in situ plastisch aufgeweitete Stützhülsen angeordnet, und zumindest die einzelnen Elemente stehen in ihrer Durchgangsbohrung unter elastischer Verspannung.

Durch die in situ plastisch aufgeweiteten Stützhülsen wird erreicht, dass nicht mehr notwendigerweise, wie bei dem Stand der Technik, von dem die EP 0 324 499 A1 ausgeht, das Material der Hohlwelle selbst plastisch verformt wird, sondern vorrangig das Material der Stützhülse. Die aus der EP 0 324 499 A1 bekannten Stützhülsen dienen daher nicht dazu, kopfseitig auf dem Außenmantel der Welle ein Bauteil zu befestigen.

Von daher liegt der Erfindung die Aufgabe zugrunde, eine Hohlwelle oder das hohle Ende einer Vollwelle derartig auszubilden, dass mit einfachen Mitteln kopfseitig ein Bauteil auf dem Außenmantel befestigt werden kann, wobei möglichst viel Raum für durchgehende Hydraulikkanäle verbleiben soll. Weiterhin soll ein Verfahren zum einfachen Verbinden des Bauteils mit der Hohlwelle gefunden werden.

Diese Aufgabe wird erfindungsgemäß mit den Merkmalen des Anspruchs 1 gelöst. Vorteilhafte Aus- und Weiterbildungen sind in den Ansprüchen 2 bis 12 beschrieben.

Anspruch 13 beschreibt ein Verfahren zum Herstellen einer Hohlwelle nach den Ansprüchen 2 bis 12. Anspruch 14 beschreibt eine Vorrichtung zum Durchführen des Verfahrens nach Anspruch 13, und Anspruch 15 eine Weiterbildung des Verfahrens nach Anspruch 13 unter Verwendung der Vorrichtung nach Anspruch 14.

Die mit der Erfindung erzielten Vorteile bestehen insbesondere darin, dass es mit einfachen Mitteln und unter Vermeidung größerer axialer Kräfte auf die fertig eingebaute Nockenwelle möglich wird, ein endseitig an einer Hohlwelle oder an das hohle Ende einer Vollwelle angeordnetes Bauteil nachträglich an die bereits mit allen übrigen Bauteilen versehene Hohlwelle anzubinden.

Darüber hinaus vorteilhaft können mit einfachen Mitteln und ohne dass hierfür ein großer Bauraum benötigt wird, Kanäle, insbesondere axial verlaufende Ölkanäle, am hohlen Ende der Welle eingebracht werden. Damit kann eine sichere und schnelle Ansteuerung eines eventuell hier anzubringenden Nockenwellenverstellers auf einer Nockenwelle angesteuert werden.

Beim Montieren von Nockenwellenverstellern, Antriebsrädern oder anderen endseitigen Anbauteilen an eine Nockenwelle, die bereits im Zylinderkopf eingebaut ist, werden nur geringe axiale Fügekräfte aufgewendet. Dadurch kommt es vorteilhaft nicht zur Beschädigung von axialen Lagerungen der Nockenwelle.

Ein Ausführungsbeispiel der Erfindung ist in der Zeichnung dargestellt und wird im Folgenden näher beschrieben. Es zeigen
- Fig. 1: einen Schnitt durch das Ende einer Hohlwelle vor der Montage eines Bauteils auf dem Außenmantel,
- Fig. 2: das Ende einer Hohlwelle gemäß Fig. 1 nach dem Anbinden des Bauteils,
- Fig. 3: eine Ausbildung gemäß Fig. 1, bei der zusätzlich ein Nockenwellenlager gezeigt ist,
- Fig. 4: die Ausbildung eines Bauteils gemäß Fig. 3 entsprechend Fig. 2 und
- Fig. 5: einen Schnitt durch einen weiter innen liegenden Teil einer Hohlwelle mit einer alternativen Befestigung der Abstützung.

Das Ausführungsbeispiel zeigt den Einsatz der Erfindung an einer mit einer Hohlwelle ausgebildeten Nockenwelle. Die Nockenwelle ist bereits bis auf das nachträglich anzubringende Bauteil fertig gestellt. Die Nocken und sonstigen Aufbauteile der Nockenwelle sind bereits durch Aufschieben auf einen Bereich mit vergrößertem Durchmesser oder durch hydraulisches örtliches Aufweiten der Hohlwelle mit der Hohlwelle fest verbunden. Die Beschreibung des Ausführungsbeispiels beschränkt sich somit auf die Anbindung eines oder mehrerer Bauteile an die soweit fertig gestellte Hohlwelle. Andere Hohlwellen, wie Getriebewellen oder Steuerwellen, sind in gleicher Weise herstellbar wie die im Ausführungsbeispiel beschriebene Nockenwelle. Des Weiteren ist es in der beschriebenen Weise möglich, Bauteile, wie beispielsweise Nockenwellen-Versteller, an das hohle Ende von Vollwellen, beispielsweise geschmiedeten oder gegossenen Nockenwellen, anzubinden.

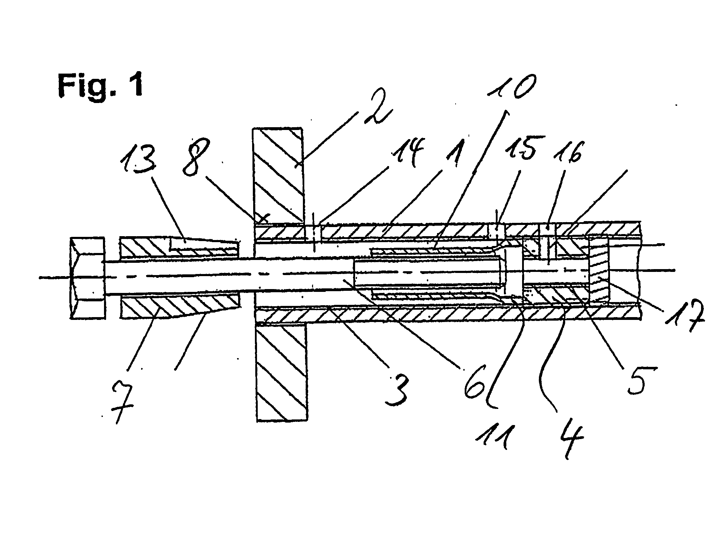

Das in den Fig. 1 bis 4 dargestellte Ende einer Nockenwelle weist eine Hohlwelle 1 auf. Die eigentlichen Aufbauteile dieser Hohlwelle 1, also im Ausführungsbeispiel die Nocken, sind nicht dargestellt. Die Nockenwelle kann auch massiv mit einem hohlen Ende ausgebildet sein.

Am Ende der Hohlwelle 1 soll mit dieser kraftschlüssig ein Bauteil 2, im Ausführungsbeispiel ein Zahnrad, eine Scheibe oder die Nabe eines Nockenwellenverstellers verbunden werden. Das Verbinden soll nach der Erfindung durch mechanisches Aufweiten der Hohlwelle 1 im Bereich des Bauteils 2 erfolgen. Hierzu ist die Hohlwelle 1 am Innendurchmesser mit einem Gewinde 3 versehen. In dieses Gewinde wird bis zu einem vorbestimmten Abstand eine als Buchse ausgebildete Abstützung 4 eingebracht. Die Abstützung 4 weist ein axiales Innengewinde 5 auf. Wie in Fig. 1 dargestellt, wird das Bauteil 2 an der vorgesehenen Position gegenüber der Hohlwelle 1 positioniert und gehalten. Eine Maschinenschraube 6, über die kopfseitig ein Dom 7 geschoben ist, wird in das Innengewinde 5 der Abstützung 4 eingeschraubt. Mit dem Einschrauben der Maschinenschraube 6 wird der Aufweitkegel des Doms 7 in die Innenbohrung der Hohlwelle 1 eingepresst und weitet die Hohlwelle 1 innerhalb des Bauteils 2 derartig auf, dass diese plastisch und elastisch radial soweit verformt wird, dass das Bauteil 2 an seinem Innendurchmesser 8 zumindest elastisch oder auch zusätzlich plastisch aufgeweitet wird, wodurch eine Pressverbindung zwischen Hohlwelle 1 und Bauteil 2 dergestalt aufgebaut ist, dass das Bauteil 2 kraftschlüssig mit der Hohlwelle 1 verbunden ist. Sofern entsprechende Maßnahmen am Bauteil 2 oder an der Hohlwelle 1 vorgenommen werden, wie Rändeln oder Sicken oder eine von kreisform abweichende Innenkontur am Bauteil 2, kann die Verbindung von Bauteil 2 und Hohlwelle 1 nicht nur kraftschlüssig, sondern auch formschlüssig sein.

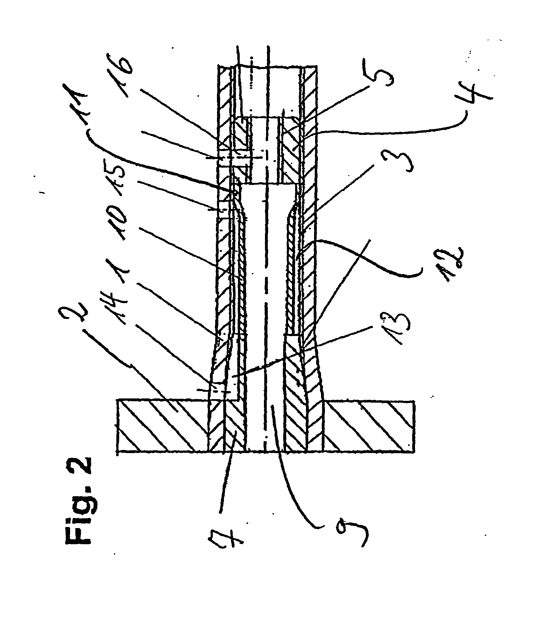

Fig. 2 zeigt das Ende der Hohlwelle 1, an dem das Bauteil 2 befestigt ist. Aus Fig. 2 ist auch erkennbar, dass die Maschinenschraube 6 nach der Montage aus dem Ende der Hohlwelle 1 wieder entfernt werden kann. Der Dom 7 bleibt jedoch in der Hohlwelle 1 und stützt die Pressverbindung mit dem Bauteil 2 zusätzlich von innen ab. Die Durchgangsbohrung und der Raum des Innengewindes 5 der Abstützung 4 kann dann als Ölkanal 9 genutzt werden. Alternativ zur gezeigten Ausbildung kann der Dorn 7 auch direkt mit einer Verlängerung ausgebildet sein, mit der der Dom 7 direkt in das Innengewinde 5 der Abstützung 4 eingeschraubt wird. Dann entfällt das Verschrauben über eine Maschinenschraube 6. In einer alternativen Ausbildung wird anstatt einer Maschinenschraube 6 die Spindel einer Montagemaschine verwendet. Das hat den Vorteil, dass für das Einpressen des Doms 7 kein verlierbares Teil mehr benötigt wird. Sobald der Dorn 7 die vorgesehene Lage unter dem Bauteil 2 eingenommen hat, fährt die Spindel der Montagemaschine wieder zurück. Beim Einsatz einer Montagemaschine kann sich dessen Werkzeug auch in anderer Weise, beispielsweise über eine Bajonettverbindung, an der Abstützung 4 festhalten. Das Einpressen des Doms 7 kann dann beispielsweise auch mittels eines Hydraulik- oder Pneumatikkolbens erfolgen.

Zur Ausbildung von zusätzlichen Ölkanälen kann der Dom 7 ein- oder mehrteilig mit einem Fortsatz 10 ausgebildet sein. Im Ausführungsbeispiel ist der Fortsatz 10 zweiteilig rohrförmig ausgebildet und liegt im montierten Zustand vor dem inneren Ende des Doms 7. Am hohlwellenseitigen Ende ist der Fortsatz 10 mit einer Ausbauchung 11 ausgebildet. Diese Ausbauchung liegt im Ausführungsbeispiel dichtend am Innendurchmesser der Hohlwelle 1 radial und axial gegen die Stirnfläche der Abstützung 4 an. Im Ausführungsbeispiel ist der Fortsatz 10 des Doms 7 bereits vor dem Einpressen des Doms 7 in die Innenbohrung der Hohlwelle 1 eingebracht. Bei einteiliger Ausbildung des Fortsatzes 10 mit dem Dom 7 wird der Fortsatz 10 selbstverständlich mit dem Einpressen des Doms 7 in die Hohlwelle 1 eingebracht.

Nach der fertigen Montage, wie in Fig. 2 gezeigt, entsteht zwischen Fortsatz 10 und Hohlwelle 1 ein Ringkanal 12. Dieser Ringkanal 12 setzt sich in einem Kanal 13 des Doms 7 fort. Radiale Bohrungen 14, 15 durch die Hohlwelle 1 verbinden den Ringkanal 12 und den sich anschließenden Kanal 13 durch die Hohlwelle 1 nach außen. Hier können sich entsprechende Hydraulikteile, die auf die Hohlwelle aufgebaut werden, anschließen. Ebenso wie es möglich ist, den Fortsatz 10 rohrförmig auszubilden, kann dieser auch mit Längswellen ausgebildet sein. Dadurch ergeben sich mehrere in Achsrichtung verlaufende Kanäle, die dann für verschiedene Zwecke verwendet werden können.

Eine weitere Bohrung 16, die sich radial durch die Hohlwelle 1 und die Abstützung 4 erstreckt, verbindet den Innenraum, den Ölkanal 9, der Hohlwelle hydraulisch mit einem auf die Hohlwelle aufgesetzten Bauteil.

Sofern es erforderlich ist, kann das Innengewinde 5 der Abstützung 4, wie in Fig. 1 gezeigt, mittels einer Abdeckung 17 zumindest in der vormontierten Stellung verschlossen sein.

Die vorbeschriebene Verbindung, die es ermöglicht, gleichzeitig Ölkanäle zum Versorgen eines Nockenwellenverstellers einzubringen, hat gerade bei der Ölversorgung des Nockenwellenverstellers wesentliche Vorteile, da die Durchflussquerschnitte wesentlich größer sind, als wenn der Nockenwellenversteller über normale Befestigungsmittel, beispielsweise über eine Keilverbindung oder eine zentrale Befestigungsschraube, am Nockenwellenende befestigt wird. Durch die größeren Ölquerschnitte kann entweder mit geringerem Differenzdruck eine bessere Verstellung erreicht werden, was zu geringeren Strömungen und damit Strömungsverlusten oder sogar Kavitation führt oder es kann bei gleichem Öldruck eine schnellere Verstellung erreicht werden. Weiterhin vorteilhaft wird mit der vorstehend beschriebenen Befestigung erreicht, dass eine dauerhafte Verbindung zwischen Nockenwelle und Nockenwellenversteller über die gesamte Lebensdauer des Motors erreicht wird. Gerade diese feste Verbindung über die gesamte Lebensdauer kann nicht unbedingt über ein Anschrauben des Nockenwellenverstellers erreicht werden.

Die beschriebene Anbindung kann nicht nur für gebaute Nockenwellen auf einer durchgehenden Hohlachse eingesetzt werden, sondern in gleicher Weise für volle Nockenwellen, die gegossen, geschmiedet oder anderweitig hergestellt sind. Hier muss nur ein hohles Ende der Nockenwelle zur Ölversorgung des Verstellers vorgesehen werden. Die Abstützung 4 kann dann selbstverständlich durch das Ende der Vollwelle gebildet sein.

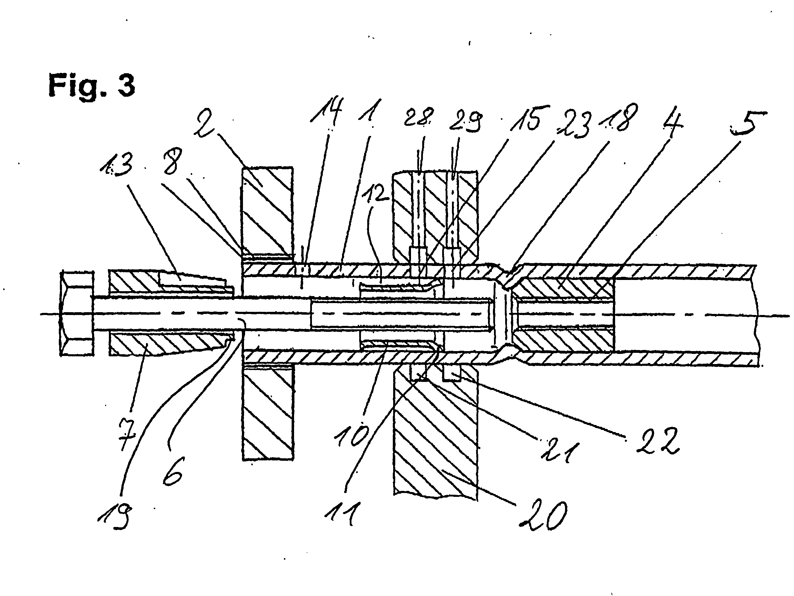

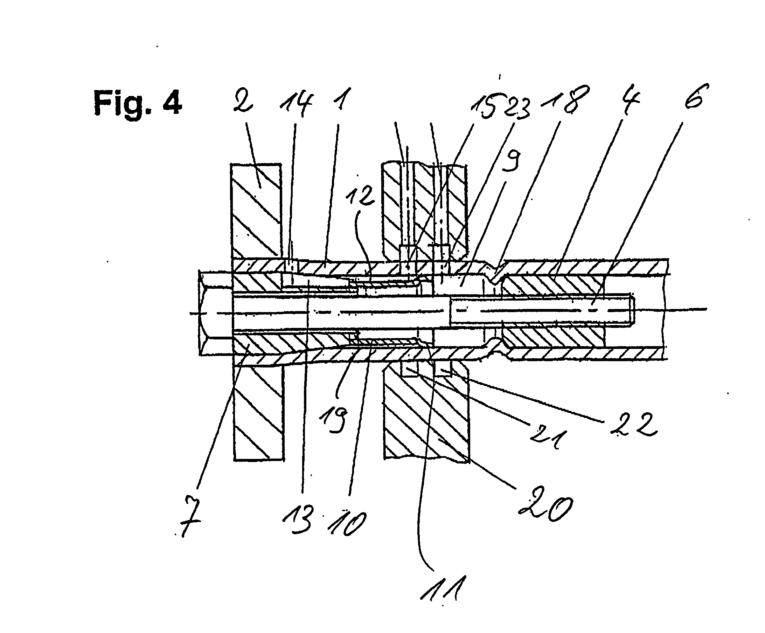

Die Fig. 3 und 4 zeigen die Hohlwelle in vormontierter und montierter Stellung mit geringfügigen Abwandlungen gegenüber der Ausbildung nach den Fig. 1 und 2.

Wesentlich bei der Ausbildung der Hohlwelle nach den Fig. 3 und 4 ist diese nicht mit einem Innengewinde ausgebildet. Der Innenmantel der Hohlwelle 1 kann jedoch eine Rändelung oder Rollierung aufweisen. Die Abstützung 4 stützt sich vielmehr axial gegen eine sich nach innen erstreckende Sicke 18 ab. Von daher muss die Abstützung 4 bereits vor dem Herstellen der Sicke 18 oder nach Möglichkeit von der Rückseite in die Hohlwelle 1 eingebracht sein.

Der Fortsatz 10 am Dorn 7 ist mit seiner Ausbauchung 11 lediglich gegen den Innendurchmesser der Hohlwelle 1 abgedichtet. Der Fortsatz 10 erstreckt sich bei der Ausbildung gemäß den Fig. 3 und 4 nicht bis zur Abstützung 4. Im Gegensatz zur Ausbildung nach den Fig. 1 und 2 liegt der Fortsatz 10 auch nicht vor dem Ende des Doms 7, sondern radial über einem Vorsprung 19 am Ende des Doms 7. Auch bei dieser Ausbildung bildet der Fortsatz 10 mit dem Innendurchmesser der Hohlwelle 1 einen Ringkanal 12, der sich in einem Kanal 13 des Doms 7 fortsetzt. In gleicher Weise wie in den Fig. 1 und 2 sind auch radiale Bohrungen 14, 15 durch die Hohlwelle 1 zum Verbinden des Ringkanals 12 und des Kanals 13 nach außen vorgesehen. Ein zweiter Kanal wird durch die Bohrung 23, die das Äußere mit dem Innenraum der Hohlwelle, dem Ölkanal 9, der nach dem Herausschrauben der Maschinenschraube 6 in voller Größe freigeben wird, gebildet. Die Bohrungen 15, 23 korrespondieren mit den im Nockenwellenlager 20 des Zylinderkopfes eingearbeiteten Ringnuten 21, 22, die durch die Bohrungen 28, 29 aus dem Zylinderkopf mit Öl zur Verstellung des nicht dargestellten Nockenwellenverstellers versorgt werden.

Die Ausbildung des Innenmantels der Hohlwelle 1 mit einem Gewinde, einer Rollierung, einer Riffelung oder einer Rändelung, bringt Vorteile bei der Montage von hochgenauen Werkstücken. Bei dieser Ausbildung müssen die Werkstücke nicht so feine Toleranzen aufweisen, da durch die vorbeschriebene Maßnahme Toleranzen ausgeglichen werden. Das Gleiche gilt auch für entsprechende Maßnahmen am Innendurchmesser des Bauteils 2 oder am Außenmantel der Hohlwelle 1. Beim Einpressen des Doms 7 in die Hohlwelle 1 wird die rollierte oder mit Gewinde versehene Oberfläche zunächst an ihren Spitzen abgeplattet, bis durch die sinkende Flächenpressung eine weitere plastische Verformung der Rollier- oder Gewinderillen an ihren Spitzen nicht mehr fortschreitet. Im Spannungsgleichgewicht wird sich die Hohlwelle 1 aufweiten. Nachdem der Hohlwellen-Außenmantel durch die Aufweitung den Innendurchmesser des Bauteils 2 erreicht hat, wird die Flächenpressung während der weiteren Aufweitung sprunghaft weiter ansteigen. Dadurch können sich die Rollierrillen oder das Gewinde erneut weiter abplatten, bis die Flächenpressung erneut unter die plastische Verformungsgrenze dieser Marken sinkt. Auch hier bildet sich ein Spannungsgleichgewicht zwischen den rückfedernden Spannungen des Bauteils 2 und den über die abgeplattenen Rollierrillen oder dem abgeplatteten Gewinde.
Der hieraus resultierende Toleranzausgleich kann durch das Maß der Rollierungen optimiert werden.

Wie in Fig. 4 gezeigt, kann die Maschinenschraube 6, wenn der Ölkanal 9 nicht benötigt wird, auch in der Hohlwelle verbleiben. Dadurch ist die Hohlwelle hydraulisch nach außen abgeschlossen.

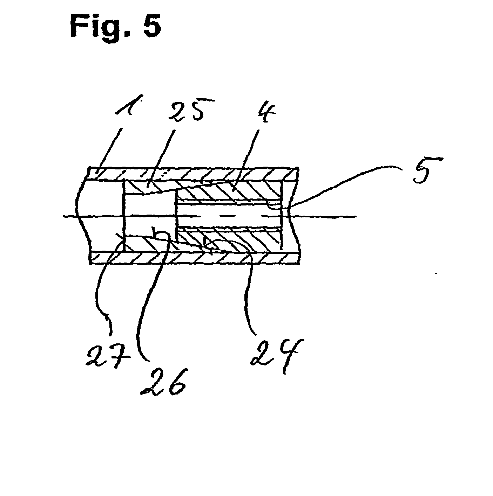

Bei der Ausbildung gemäß Fig. 5 wird die Vorrichtung zum mechanischen Aufweiten der Hohlwelle 1 für das Verspannen eines beliebigen Bauteils 2 an einer beliebigen Stelle der Hohlwelle 1 verwendet. Bei dieser Ausbildung ist die Abstützung 4 mit einem Außenkegel 24 ausgebildet. Mit der Abstützung 4 wirkt eine geschlitzte oder ungeschlitzte Buchse 25 zusammen, die einen entsprechenden Innenkegel 26 aufweist. Die nicht dargestellte Maschinenschraube weist einen nach außen gerichteten Absatz auf, der sich gegen die äußere Stirnfläche 27 der Buchse 25 legt. Beim Einschrauben der Maschinenschraube in das Innengewinde 5 der Abstützung 4 schiebt sich die Buchse 25 mit ihrem Innenkegel 26 über den Außenkegel 24 der Abstützung 4 und wird somit selbst aufgeweitet, aber weitet auch die Hohlwelle 1 auf, wodurch ein an dieser Stelle angeordnetes, nicht dargestelltes Bauteil 2 mit der Hohlwelle 1 verpresst wird.

In einer besonderen Ausbildung kann die Buchse 25 auch ein Teil des Fortsatzes 10, wie in Fig. 4 gezeigt, sein. Dadurch wird beim Anziehen der Maschinenschraube 6 ein Verspannen der Abstützung 4 bei gleichzeitigem Abdichten der Ölkanäle 12, 9 erreicht.

### Bezugszeichenliste

- 1.: Hohlwelle
- 2.: Bauteil
- 3.: Gewinde
- 4.: Abstützung
- 5.: Innengewinde
- 6.: Maschinenschraube
- 7.: Dom
- 8.: Innendurchmesser
- 9.: Ölkanal
- 10.: Fortsatz
- 11.: Ausbauchung
- 12.: Ringkanal
- 13.: Kanal
- 14.: Bohrung
- 15.: Bohrung
- 16.: Bohrung
- 17.: Abdeckung
- 18.: Sicke
- 19.: Vorsprung
- 20.: Ring
- 21.: Ringkanal
- 22.: Ringkanal
- 23.: Bohrung
- 24.: Außenkegel
- 25.: Buchse
- 26.: Innenkegel
- 27.: Stirnfläche
- 28.: Bohrung
- 29.: Bohrung

## Patentansprüche

1. Wenigstens abschnittsweise als Hohlwelle (1) ausgebildete Welle mit über eine axial bewegliche Einrichtung durch mechanisches Aufweiten am Außenmantel befestigtem Bauteil (2),wobei innerhalb der Hohlwelle (1) oder des hohlen Teils der Welle eine Abstützung (4) für die axial bewegliche Einrichtung radial kraft- oder formschlüssig befestigt ist, **dadurch gekennzeichnet, dass** die Abstützung (4) als Buchse mit einem axialen Innengewinde (5) ausgebildet ist.

2. Hohlwelle (1) nach Anspruch 1, **dadurch gekennzeichnet, dass** die Abstützung (4) mit einem Außengewinde ausgebildet und in ein Innengewinde (3) der Hohlwelle (1) eingeschraubt ist.

3. Hohlwelle (1) nach Anspruch 1, **dadurch gekennzeichnet, dass** die Abstützung (4) an einer nach innen gerichteten Sicke (18) der Hohlwelle (1) axial anliegt.

4. Hohlwelle (1) nach Anspruch 1, **dadurch gekennzeichnet, dass** die Abstützung (4) Teil des massiven Abschnitts einer Welle mit hohlem Ende ist.

5. Hohlwelle (1) nach Anspruch 4, **dadurch gekennzeichnet, dass** der Innenmantel und/oder der Außenmantel der Hohlwelle (1) wenigstens unter dem Bauteil (2) und/oder der Innenmantel des Bauteils (2) gerändelt oder rolliert oder mit einem geschnittenen oder geformten Gewinde ausgebildet ist.

6. Hohlwelle (1) nach einem oder mehreren der Ansprüche 1 bis 5, **dadurch gekennzeichnet, dass** innerhalb der Hohlwelle (1) im Bereich des aufgesetzten Bauteils (2) ein mit einem Aufweitkegel ausgebildeter Dorn (7) eingepresst ist.

7. Hohlwelle (1) nach Anspruch 6, **dadurch gekennzeichnet, dass** der Dorn (7) eine zentrale Längsbohrung aufweist.

8. Hohlwelle (1) nach Anspruch 6 oder Anspruch 7, **dadurch gekennzeichnet, dass** der Dorn (7) mit einem ein- oder mehrteiligen, in die Hohlwelle (1) ragenden Fortsatz (10) ausgebildet ist, der an seinem Ende umlaufend radial an der Innenbohrung der Hohlwelle (1) und/oder axial an der Abstützung (4) anliegt.

9. Hohlwelle (1) nach Anspruch 8, **dadurch gekennzeichnet, dass** der Dorn (7) und/oder der Fortsatz (10) mit einem oder mehreren in Achsrichtung der Hohlwelle verlaufenden Kanälen (12, 13) ausgebildet ist.

10. Hohlwelle (1) nach Anspruch 9, **dadurch gekennzeichnet, dass** sich an die Kanäle (12, 13) radiale Durchbrüche, vorzugsweise Bohrungen (14, 15) durch die Hohlwelle (1), anschließen.

11. Hohlwelle (1) nach einem oder mehreren der Ansprüche 1 bis 10, **dadurch gekennzeichnet, dass** die Hohlwelle (1) eine Nockenwelle ist und das am Außenmantel befestigte Bauteil (2) ein Nockenwellen-Versteller ist.

12. Verfahren zum Herstellen einer Hohlwelle (1) nach einem oder mehreren der Ansprüche 1 bis 11, **dadurch gekennzeichnet, dass** nach dem Einbringen der Abstützung (4) und dem Aufschieben des Bauteils (2) auf die Hohlwelle (1) der Dorn (7) mittels eines mit einem Außengewinde versehenen Werkstückes oder einer entsprechenden Verlängerung, das/die in das Innengewinde (5) der Abstützung (4) fasst, in die Hohlwelle (1) unter das Bauteil (2) gepresst wird.

13. Vorrichtung zum Durchführen des Verfahrens nach Anspruch 12, **dadurch gekennzeichnet, dass** als Werkstück zum Einpressen des Doms (7) ein Gewindestift oder eine Maschinenschraube (6) vorgesehen ist.

14. Verfahren nach Anspruch 12 unter Verwendung der Vorrichtung nach Anspruch 13, **dadurch gekennzeichnet, dass** der Gewindestift oder die Maschinenschraube (6) nach dem Einpressen des Doms (7) wieder entfernt wird.

## Claims

1. Shaft formed at least partially as a hollow shaft (1), having a component (2) which is attached to the outer surface by means of an axially moveable device using mechanical expansion, wherein within the hollow shaft (1) or the hollow part of the shaft a support (4) for the axially movable device is attached radially in a non-positive or positive manner, **characterised in that** the support (4) is formed as a bushing with an axial internal thread (5).

2. Hollow shaft (1) as claimed in claim 1, **characterised in that** the support (4) is formed with an external thread and is screwed into an internal thread (3) of the hollow shaft (1).

3. Hollow shaft (1) as claimed in claim 1, **characterised in that** the support (4) lies axially against an inwardly directed bead (18) of the hollow shaft (1).

4. Hollow shaft (1) as claimed in claim 1, **characterised in that** the support (4) is part of the solid portion of a shaft with a hollow end.

5. Hollow shaft (1) as claimed in claim 4, **characterised in that** the inner surface and/or the outer surface of the hollow shaft (1), at least below the component (2), and/or the inner surface of the component (2) is knurled or rolled or is formed with a cut or moulded thread.

6. Hollow shaft (1) as claimed in any one or several of claims 1 to 5, **characterised in that** a mandrel (7) formed with an expanding cone is pressed into the hollow shaft (1) in the region of the mounted component (2).

7. Hollow shaft (1) as claimed in claim 6, **characterised in that** the mandrel (7) has a central longitudinal bore.

8. Hollow shaft (1) as claimed in claim 6 or 7, **characterised in that** the mandrel (7) is formed with a one-piece or multi-piece projection (10) which protrudes into the hollow shaft (1) and which at its end lies peripherally and radially against the inner bore of the hollow shaft (1) and/or axially against the support (4).

9. Hollow shaft (1) as claimed in claim 8, **characterised in that** the mandrel (7) and/or the projection (10) is formed with one or several channels (12, 13) extending in the axial direction of the hollow shaft.

10. Hollow shaft (1) as claimed in claim 9, **characterised in that** radial orifices, preferably bores (14, 15) through the hollow shaft (1) adjoin the channels (12, 13).

11. Hollow shaft (1) as claimed in any one or several of claims 1 to 10, **characterised in that** the hollow shaft (1) is a cam shaft and the component (2) attached to the outer surface is a cam shaft displacer.

12. Method for producing a hollow shaft (1) as claimed in any one or several of claims 1 to 11, **characterised in that** after the support (4) has been introduced and the component (2) has been pushed onto the hollow shaft (1) the mandrel (7) is pressed into the hollow shaft (1) below the component (2) by means of a tool provided with an external thread or by means of a corresponding extension, which tool or extension engages the internal thread (5) of the support (4).

13. Device for carrying out the method as claimed in claim 12, **characterised in that** a threaded pin or a machine screw (6) is provided as a work piece for pressing in the mandrel (7).

14. Method as claimed in claim 12 using the device as claimed in claim 13, **characterised in that** the threaded pin or the machine screw (6) is removed after the mandrel (7) has been pressed in.

## Revendications

1. Arbre (1) réalisé au moins par sections comme un arbre creux, avec un composant (2) fixé par un élargissement mécanique à l'enveloppe externe, par l'intermédiaire d'un dispositif axialement mobile, dans lequel un appui (4) pour le dispositif axialement mobile est fixé radialement par frottement ou par emboîtement, à l'intérieur de l'arbre creux (1) ou de la partie creuse de l'arbre, **caractérisé en ce que** l'appui (4) est réalisé sous la forme d'un manchon avec un filetage axial interne (5).

2. Arbre creux (1) selon la revendication 1, **caractérisé en ce que** l'appui (4) est réalisé avec un filet externe, et est vissé dans un filet interne (3) de l'arbre creux (1).

3. Arbre creux (1) selon la revendication 1, **caractérisé en ce que** l'appui (4) est axialement contigu à une nervure (18), dirigée vers l'intérieur, de l'arbre creux (1).

4. Arbre creux (1) selon la revendication 1, **caractérisé en ce que** l'appui (4) est une partie de la section massive d'un arbre à extrémité creuse.

5. Arbre creux (1) selon la revendication 4, **caractérisé en ce que** l'enveloppe interne et/ou l'enveloppe externe de l'arbre creux (1), au moins en dessous du composant (2) et/ou l'enveloppe interne du composant (2) est moletée ou polie au brunissoir, ou pourvue d'un filetage usiné ou moulé.

6. Arbre creux (1) selon une ou plusieurs des revendications 1 à 5, **caractérisé en ce qu'**un mandrin (7) réalisé avec un évasement conique est pressé à l'intérieur de l'arbre creux (1) dans la région du composant (2) .

7. Arbre creux (1) selon la revendication 6, **caractérisé en ce que** le mandrin (7) présente un alésage longitudinal central.

8. Arbre creux (1) selon la revendication 6 ou la revendication 7, **caractérisé en ce que** le mandrin (7) est réalisé avec un prolongement (10) en une ou plusieurs pièces, s'étendant dans l'arbre creux (1), qui, à son extrémité, est en contact périphérique radial avec l'alésage interne de l'arbre creux (1) et/ou axiale avec l'appui (4).

9. Arbre creux (1) selon la revendication 8, **caractérisé en ce que** le mandrin (7) et/ou le prolongement (10) sont réalisés avec un ou plusieurs canaux (12, 13) s'étant dans la direction axiale de l'arbre creux.

10. Arbre creux (1) selon la revendication 9, **caractérisé en ce que** des ouvertures traversantes radiales, de préférence des alésages (14, 15) se raccordent aux canaux (12, 13) par l'intermédiaire de l'arbre creux (1).

11. Arbre creux (1) selon une ou plusieurs des revendications 1 à 10, **caractérisé en ce que** l'arbre creux (1) est un arbre à came, et le composant (2) fixé à l'enveloppe externe est un dispositif de réglage d'arbre à came.

12. Procédé de fabrication d'un arbre creux (1) selon une ou plusieurs des revendications 1 à 11, **caractérisé en ce que**, après la mise en place de l'appui (4) et le coulissement du composant (2) sur l'arbre creux (1), le mandrin (7) est pressé au moyen d'une pièce pourvue d'un filet externe ou d'un prolongement correspondant, qui s'engage dans le filet interne (5) de l'appui (4), dans l'arbre creux (1), en dessous du composant (2).

13. Dispositif pour la mise en oeuvre du procédé selon la revendication 12, **caractérisé en ce que** l'on prévoit comme pièce pour presser le mandrin (7) une tige filetée ou un boulon (6).

14. Procédé selon la revendication 12, utilisant le dispositif selon la revendication 13, **caractérisé en ce que** la tige filetée ou le boulon (6) est enlevé après le mise en place du mandrin (7).
